# EUROPÄISCHE PATENTANMELDUNG

(11) **EP 3 476 565 A1**
(43) Veröffentlichungstag der Anmeldung: **01.05.2019**
(21) Anmeldenummer: 18202521.3
(22) Anmeldetag: 25.10.2018
(51) Int. Cl.: B29C 48/156, B29C 48/34, B29C 48/92, B29C 48/355, B29C 48/285

(54) **VORRICHTUNG ZUM UMHÜLLEN EINES LEITERS**

(30) Priorität: 30.10.2017 AT 509062017
(71) Anmelder: Rosendahl Nextrom GmbH, 8212 Pischelsdorf am Kulm (AT)
(72) Erfinder: Dipl.-Ing. HOERSCHLAEGER, Werner, 8054 Pirka (AT)
(74) Vertreter: Beer & Partner Patentanwälte KG

(57) **Zusammenfassung**

Eine Vorrichtung zum Umhüllen wenigstens eines Leiters (2) mit einer Umhüllung (21) aus Kunststoff weist einen Extruder (4), eine nach dem Extruder (4) angeordnete erste Kühleinrichtung (6), eine erste Fördereinrichtung (7) nach der ersten Kühleinrichtung (6) und eine weitere Fördereinrichtung (13) zum Fixieren der Länge der Umhüllung (21) mit Bezug zum Leiter (2) auf. Die erste Fördereinrichtung (7) weist zwei Mittel (8, 9) zum Steuern der Fördergeschwindigkeit der Umhüllung (21) auf, welche mit unterschiedlichen Fördergeschwindigkeiten antreibbar sind.

## Beschreibung

Die Erfindung betrifft eine Vorrichtung zum Umhüllen wenigstens eines Leiters mit einer Umhüllung aus Kunststoff, mit einem Extruder, einer nach dem Extruder angeordneten ersten Kühleinrichtung, einer ersten Fördereinrichtung nach der ersten Kühleinrichtung und einer weiteren Fördereinrichtung zum Fixieren der Länge der Umhüllung mit Bezug zum Leiter.

Eine derartige Vorrichtung ist beispielsweise aus der US 8 489 219 B1 bekannt. Das Problem bei derartigen Vorrichtungen, insbesondere wenn es sich um Vorrichtungen zum Umhüllen von Lichtwellenleitern handelt, liegt darin, dass der Leiter mit einer relativ genau definierten Überlänge in der Umhüllung aufgenommen sein soll, wobei die um den Leiter herum extrudierte Umhüllung während der Erstarrung bzw. Abkühlung ein Schrumpfungsverhalten aufweist, welches eine präzise Einstellung der Überlänge erschwert.

Der Erfindung liegt daher die Aufgabe zugrunde, eine Vorrichtung der eingangs genannten Art zu schaffen, bei der eine Überlänge des Leiters möglichst präzise eingestellt bzw. das Schrumpfungsverhalten der Umhüllung möglichst genau gesteuert werden kann.

Gelöst wird diese Aufgabe mit einer Vorrichtung, welche die Merkmale des Anspruchs 1 aufweist.

Erfindungsgemäß weist die erste Fördereinrichtung zwei Mittel zum Steuern der Fördergeschwindigkeit der Umhüllung auf, welche mit unterschiedlichen Fördergeschwindigkeiten antreibbar sind.

Nachdem die Umhüllung des Leiters nach dem Extruder von einer nach dem Extruder angeordneten, ersten Kühleinrichtung soweit abgekühlt wurde, dass sie nur mehr ein geringes plastisches Formänderungsvermögen aufweist, wird sie, bevor sie einer weiteren Fördereinrichtung zum Fixieren ihrer Länge mit Bezug zum Leiter zugeführt wird, durch die erste Fördereinrichtung geführt, die die zwei Mittel zum Steuern der Fördergeschwindigkeit der Umhüllung aufweist. Durch diese beiden, mit unterschiedlichen Geschwindigkeiten antreibbaren Mittel kann einerseits die Geschwindigkeit, mit der der umhüllte Leiter vom ersten Mittel aus der vorhergehenden Einrichtung abgezogen wird, und andererseits die Geschwindigkeit, mit der der umhüllte Leiter vom zweiten Mittel zu der folgenden Einrichtung weiter gefördert wird, individuell eingestellt werden. Weiters kann damit bei Bedarf auch zwischen den beiden Mitteln eine gewisse Streckung bzw. Stauchung der Umhüllung bewirkt werden, sodass insgesamt eine gezielte Einstellung des Schrumpfungsverhaltens der Umhüllung mit Bezug auf die gewünschte Überlänge des Leiters möglich ist.

Wenn im Vorstehenden und in der folgenden Beschreibung von einem Leiter gesprochen wird, so ist dies ein Sammelbegriff sowohl für einen einzelnen Leiter als auch für mehrere Leiter, Leiterbündel bzw. Anordnungen aus bereits umhüllten Leitern oder Leiterbündeln. Des Weiteren fallen unter den Begriff Leiter alle Arten von Leitern, insbesondere Lichtwellenleiter, aber auch galvanische Leiter, wenngleich bei den letztgenannten Leitern die eingangs besprochene Problematik in verringertem Maß auftritt.

Die Mittel zum Steuern der Fördergeschwindigkeit können beliebig gewählt bzw. kombiniert werden. Beispielsweise ist es möglich, dass ein Mittel oder beide Mittel ein Bandabzug ist bzw. sind, zwischen dessen bzw. deren Bändern der umhüllte Leiter kraftschlüssig gefördert wird.

Ebenso möglich und bei der Erfindung bevorzugt ist allerdings, wenn wenigstens ein Mittel, vorzugsweise beide Mittel, zum Steuern der Fördergeschwindigkeit zwei Scheiben aufweist bzw. aufweisen, zwischen denen der umhüllte Leiter kraftschlüssig gefördert wird, weil damit eine kompakte und sehr effektive Bauweise möglich ist.

Wenn das bzw. die Mittel zum Steuern der Fördergeschwindigkeit Scheiben aufweist bzw. aufweisen, ist erfindungsgemäß eine Ausführungsform besonders bevorzugt, bei der wenigstens eine der Scheiben eine V-förmige Nut an ihrem Umfang aufweist. Diese Ausführungsform wird bevorzugt, wenn auch nicht zwingend, mit einer Scheibe kombiniert, die einen flachen Umfang aufweist. Die Scheibe mit dem flachen bzw. nicht profilierten Umfang drückt dann den umhüllten Leiter in die Nut der anderen Scheibe, in der er aufgrund der V-förmigen Gestaltung der Nut sehr gut kraftschlüssig gehalten wird.

Wenn in einer weiteren, bevorzugten Ausführungsform der Erfindung der Abstand zwischen den Mitteln zum Steuern der Fördergeschwindigkeit einstellbar ist, ermöglicht dies, auf das Abkühlverhalten bzw. das plastische Verhalten des jeweils gewählten Kunststoffes für die Umhüllung bei bestimmten Temperaturen bzw. bei bestimmten Wandstärken der Umhüllung Rücksicht zu nehmen, weil die Verweilzeit des umhüllten Leiters zwischen den beiden Mitteln steuerbar ist, ohne die Fördergeschwindigkeit zu verändern.

Dies ist insbesondere dann vorteilhaft, wenn zwischen den Mitteln zum Steuern der Fördergeschwindigkeit eine weitere Kühleinrichtung angeordnet ist, oder wenn die Mittel zum Steuern der Fördergeschwindigkeit in einer Kühleinrichtung angeordnet sind.

Weitere Merkmale und Vorteile der Erfindung ergeben sich aus der nachfolgenden Beschreibung eines bevorzugten, den Schutzbereich nicht beschränkenden, Ausführungsbeispiels der Erfindung unter Bezugnahme auf die angeschlossenen Zeichnungen. Es zeigt:
- Fig. 1: eine Ausführungsform einer erfindungsgemäßen Vorrichtung zum Umhüllen wenigstens eines Leiters mit einer Umhüllung aus Kunststoff und
- Fig. 2: eine bevorzugte Ausführungsform eines Mittels zum Steuern der Fördergeschwindigkeit der Umhüllung.

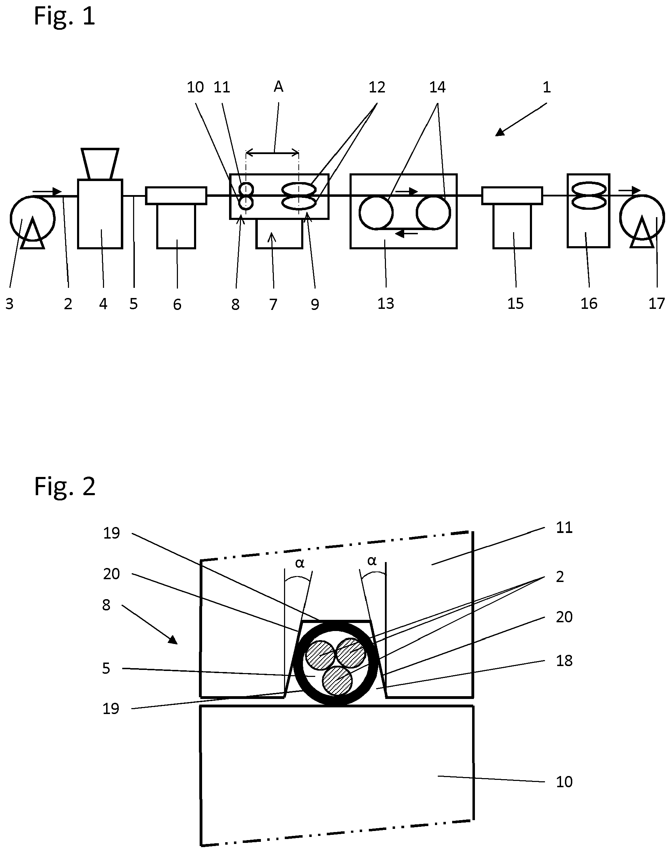

In Fig. 1 ist eine Ausführungsform einer erfindungsgemäßen Vorrichtung dargestellt, die aber nur beispielhaft ist und, abgesehen von den erfindungsgemäßen Merkmalen, wie sie in den Ansprüchen definiert sind, im Rahmen der vorliegenden Erfindung bezüglich vieler Komponenten auch anders ausgeführt sein kann, ohne dass dies im Folgenden einer besonderen Erwähnung bedarf.

Bei der dargestellten Ausführungsform wird ein Leiter 2 von einer Spule 3 abgezogen und in einem Extruder 4 mit einer Umhüllung 21 aus Kunststoff versehen. Es versteht sich, dass der Leiter 2 nicht von einer Spule 3 abgezogen werden muss, sondern dass er auch von einer anderen Einrichtung kommen kann, beispielsweise einer Verseileinrichtung, bei der zwei oder mehr Leiter 2 mit wechselnder Schlagrichtung miteinander verseilt wurden. Ebenso kann mehr als eine Spule 3 vorgesehen sein, von denen zwei oder mehr Leiter 2 oder Leiterbündel abgezogen und dem Extruder 4 zugeführt werden.

Ebenso ist es möglich, dass vor dem Extruder 4 ein Gel, Pulver oder sonstiges Gleitmittel, Trennmittel oder dergleichen, das für den jeweiligen Aufbau und Einsatzzweck des herzustellenden Kabels geeignet ist oder benötigt wird, auf den Leiter 2 aufgebracht wird.

Nach dem Extruder 4 tritt der umhüllte Leiter 5 in eine erste Kühleinrichtung 6 ein, in der die Umhüllung 21 auf eine Temperatur abgekühlt wird, bei der sie bereits eine gewisse Festigkeit und Formstabilität aufweist.

Nach der ersten Kühleinrichtung 6 ist die für die Erfindung wesentliche, erste Fördereinrichtung 7 angeordnet, welche ein erstes Mittel 8 und ein zweites Mittel 9 aufweist, mit denen die Fördergeschwindigkeit der Umhüllung 21 mit dem darin angeordneten Leiter 2 gesteuert bzw. geregelt werden kann.

Jedes Mittel 8, 9 weist einen separaten Antrieb auf, mit dem die Umfangsgeschwindigkeit bzw. Fördergeschwindigkeit des jeweiligen Mittels 8, 9 unabhängig von der Umfangsgeschwindigkeit bzw. Fördergeschwindigkeit des jeweils anderen Mittels 8, 9 eingestellt werden kann. In der in Fig. 1 dargestellten Ausführungsform ist eine Kombination aus einem ersten Mittel 8 mit zwei Scheiben 10, 11 und einem zweiten Mittel 9 mit einem Bandabzug mit zwei umlaufenden Bändern 12 dargestellt. Bevorzugt, wenn auch nicht zwingend, ist bei der Erfindung jedoch, wenn das erste Mittel 8 und das zweite Mittel 9 im Wesentlichen die gleiche Bauart aufweisen.

Zwischen den beiden Mitteln 8, 9 kann eine Kühleinrichtung angeordnet sein, mit welcher die Abkühlgeschwindigkeit der Umhüllung 21 gesteuert werden kann. Ebenso ist es möglich, dass die erste Fördereinrichtung 7 beispielsweise ein Tauchbecken aufweist, in welches die beiden Mittel 8, 9 mit dem zwischen ihnen geführten, umhüllten Leiter 5 getaucht sind.

Es versteht sich, dass die als "erste" Fördereinrichtung bezeichnete Fördereinrichtung 7 nicht die tatsächlich erste Fördereinrichtung sein muss, sondern dass es im Rahmen der Erfindung auch möglich ist, dass vor der Fördereinrichtung 7 bereits eine oder mehrere andere Fördereinrichtungen angeordnet sind. Ebenso muss die erste Kühleinrichtung 6 nicht die einzige Kühleinrichtung sein, sondern es können auch mehrere Kühleinrichtungen, gegebenenfalls mit dazwischen angeordneten Fördereinrichtungen, vorgesehen sein.

Der Abstand A zwischen den beiden Mitteln 8, 9 ist in einer besonders bevorzugten, allerdings nicht zwingenden, Ausführungsform der Erfindung einstellbar. Damit kann einerseits auf die Durchlaufzeit des umhüllten Leiters 5 zwischen den beiden Mitteln 8, 9 und somit dessen Abkühlung dazwischen Einfluss genommen werden kann. Andererseits kann auch auf den Grad, wie weit die Umhüllung 21 zwischen den beiden Mitteln 8, 9 gestreckt bzw. gestaucht wird, Einfluss genommen werden, wenn die Mittel 8, 9 mit unterschiedlichen Fördergeschwindigkeiten betrieben werden. So führt bei einem bestimmten Geschwindigkeitsunterschied zwischen den beiden Mitteln 8, 9 ein größerer Abstand A zu einer geringeren Streckung oder Stauchung als ein kleinerer Abstand A.

Nach der Fördereinrichtung 7 ist eine weitere Fördereinrichtung 13 angeordnet, in der die Umhüllung 21 so weit abgekühlt bzw. temperiert wird, dass sie im Wesentlichen kein plastisches, sondern nur mehr ein elastisches Formänderungsvermögen aufweist, womit die Überlänge des Leiters 2 gegenüber seiner Umhüllung 21 weitgehend fixiert wird. Bevorzugt, wenn auch nicht zwingend, kommt als weitere Fördereinrichtung 13 ein so genannter Scheibenabzug zum Einsatz, bei dem der umhüllte Leiter 5 wenigstens einfach, vorzugsweise mehrfach, um zwei Abzugsscheiben 14 geführt und dabei auf die gewünschte bzw. notwendige Temperatur abgekühlt wird.

Dabei kann insbesondere die Fördergeschwindigkeit des zweiten Mittels 9 in Relation zur Fördergeschwindigkeit der weiteren Fördereinrichtung 13 von Relevanz sein, weil damit die Überlänge des Leiters 2 gegenüber der Umhüllung 21 eingestellt werden kann, bevor die Umhüllung 21 in der weiteren Fördereinrichtung 13 so weit abgekühlt wird, dass sie kein plastisches Formänderungsvermögen mehr aufweist.

Die Steuerung der Fördergeschwindigkeit der weiteren Fördereinrichtung 13 und der ersten Fördereinrichtung 7, insbesondere des Mittels 9, kann bevorzugt, aber natürlich nicht zwingend, so erfolgen, dass die Fördereinrichtung 13 die Fördergeschwindigkeit vorgibt und somit der "Master" ist, und die erste Fördereinrichtung 7 in Relation dazu gesteuert wird, und somit der "Slave" ist.

Nach der weiteren Fördereinrichtung 13 können weitere, für die vorliegende Erfindung nicht bedeutsame, an sich bekannte und im Wesentlichen an das herzustellende Kabel angepasste Einrichtungen, beispielsweise eine weitere Kühleinrichtung 15 und ein Bandabzug 16, angeordnet sein, bevor der umhüllte Leiter 5 bzw. das so hergestellte Kabel beispielsweise auf eine Spule 17 aufgespult wird.

In Fig. 2 ist eine bevorzugte Ausführungsform der Mittel 8, 9 zum Steuern der Fördergeschwindigkeit der Umhüllung 21 bzw. des umhüllten Leiters 5 in Form von Scheiben 10, 11 dargestellt. Von den Scheiben 10, 11 sind nur die Bereiche dargestellt, in denen sie einander unmittelbar gegenüber liegen und zwischen sich den umhüllten Leiter 5 kraftschlüssig bzw. reibschlüssig einklemmen bzw. halten.

In der dargestellten Ausführungsform weist die obere Scheibe 11 eine sich V-förmig erweiternde Nut 18 mit einem ebenen Grund 19 und Seitenwänden bzw. Flanken 20 auf. Die Flankenwinkel α liegen beispielsweise in einem Bereich zwischen 1° und 10°, vorzugsweise etwa 5°. Die untere Scheibe 10 weist einen flachen, d.h. nicht profilierten Umfang auf und drückt den umhüllten Leiter 5 in die V-förmige Nut 18.

In Fig. 2 ist schematisch ein umhüllter Leiter 5 dargestellt, der beispielsweise drei Leiter 2 aufweist, die in einer Umhüllung 21 aufgenommen sind, die vom Extruder 4 um die drei Leiter 2 herum extrudiert wurde. Die Dimension der Nut 18, also deren Breite, Tiefe und Flankenwinkel α, ist so auf den Durchmesser und den Aufbau des umhüllten Leiters 5 bzw. den Werkstoff der Umhüllung 21 abgestimmt, dass der umhüllte Leiter 5 von der Scheibe 10 so fest in die Nut 18 gedrückt wird, dass einerseits die Haftreibung zwischen der Umhüllung 21 und den Innenflächen der Nut 18 ausreichend groß ist, dass es nicht zu einem unzulässig großen Schlupf kommt, andererseits eine Beschädigung der Umhüllung 21 und der darin aufgenommenen Leiter 2 jedoch zuverlässig vermieden wird.

Der Werkstoff der Scheiben 10, 11 ist bevorzugt Stahl, wobei es aber auch möglich ist, dass eine und/oder beide Scheiben 10, 11 aus einem anderen Werkstoff bestehen oder mit einem anderen Werkstoff beschichtet sind.
- 1: Vorrichtung
- 2: Leiter
- 3: Spule
- 4: Extruder
- 5: umhüllter Leiter
- 6: erste Kühleinrichtung
- 7: erste Fördereinrichtung
- 8: erstes Mittel
- 9: zweites Mittel
- 10: Scheibe
- 11: Scheibe
- 12: Bänder
- 13: weitere Fördereinrichtung
- 14: Abzugsscheiben
- 15: weitere Kühleinrichtung
- 16: Bandabzug
- 17: Spule
- 18: Nut
- 19: Grund
- 20: Seitenwände bzw. Flanken
- 21: Umhüllung

## Patentansprüche

1. Vorrichtung zum Umhüllen wenigstens eines Leiters (2) mit einer Umhüllung (21) aus Kunststoff, mit einem Extruder (4), einer nach dem Extruder (4) angeordneten ersten Kühleinrichtung (6), einer ersten Fördereinrichtung (7) nach der ersten Kühleinrichtung (6) und einer weiteren Fördereinrichtung (13) zum Fixieren der Länge der Umhüllung (21) mit Bezug zum Leiter (2), **dadurch gekennzeichnet, dass** die erste Fördereinrichtung (7) zwei Mittel (8, 9) zum Steuern der Fördergeschwindigkeit der Umhüllung (21) aufweist, welche mit unterschiedlichen Fördergeschwindigkeiten antreibbar sind.

2. Vorrichtung nach Anspruch 1, **dadurch gekennzeichnet, dass** wenigstens ein Mittel (9) zum Steuern der Fördergeschwindigkeit ein Bandabzug ist, zwischen dessen Bändern (12) der umhüllte Leiter (5) kraftschlüssig gefördert wird.

3. Vorrichtung nach Anspruch 1 oder 2, **dadurch gekennzeichnet, dass** wenigstens ein Mittel (8) zum Steuern der Fördergeschwindigkeit zwei Scheiben (10, 11) aufweist, zwischen denen der umhüllte Leiter (5) kraftschlüssig gefördert wird.

4. Vorrichtung nach Anspruch 3, **dadurch gekennzeichnet, dass** wenigstens eine der Scheiben (11) eine V-förmige Nut (18) an ihrem Umfang aufweist.

5. Vorrichtung nach Anspruch 4, **dadurch gekennzeichnet, dass** ein Flankenwinkel (α) der Nut zwischen 1° und 10° liegt.

6. Vorrichtung nach Anspruch 4 oder 5, **dadurch gekennzeichnet, dass** eine Scheibe (10) einen flachen Umfang aufweist.

7. Vorrichtung nach einem der Ansprüche 1 bis 6, **dadurch gekennzeichnet, dass** der Abstand (A) zwischen den Mitteln (8, 9) zum Steuern der Fördergeschwindigkeit einstellbar ist.

8. Vorrichtung nach einem der Ansprüche 1 bis 7, **dadurch gekennzeichnet, dass** zwischen den Mitteln (8, 9) zum Steuern der Fördergeschwindigkeit eine weitere Kühleinrichtung angeordnet ist oder dass die Mittel (8, 9) zum Steuern der Fördergeschwindigkeit in einer Kühleinrichtung angeordnet sind.

9. Vorrichtung nach einem der Ansprüche 1 bis 8, **dadurch gekennzeichnet, dass** die weitere Fördereinrichtung (13) eine Kühleinrichtung aufweist oder in einer Kühleinrichtung angeordnet ist.

10. Vorrichtung nach einem der Ansprüche 1 bis 9, **dadurch gekennzeichnet, dass** die weitere Fördereinrichtung (13) einen Scheibenabzug aufweist.
